# EUROPEAN PATENT APPLICATION

(11) **EP 3 613 646 A1**
(43) Date of publication of application: **26.02.2020**
(21) Application number: 19190991.0
(22) Date of filing: 09.08.2019
(51) Int. Cl.: B60T 11/16

(54) **HYDRAULIC OPERATING DEVICE FOR A CYCLE OR FOR A MOTORCYCLE COMPRISING A DISTRIBUTION BODY OF HYDRAULIC FLUID**

(30) Priority: 10.08.2018 IT 201800008056
(71) Applicant: Sunstar Engineering GmbH, 86641 Rain am Lech (DE)
(72) Inventor: BRIOSCHI, Cesare, 23851 GALBIATE (LC) (IT); BASSO, Davide, 22066 MARIANO COMENSE (CO) (IT)
(74) Representative: Locatelli, Massimo

(57) **Abstract**

A hydraulic operating device (10) for a hydraulic system fluid of a cycle or of a motorcycle comprising a body (100), a first chamber (11) carved into the body (100) in fluid communication with a tank (12), a distribution body (80) for the hydraulic system fluid, a cartridge (40), a first elastic element (70) and a piston (30).

## Description

The present invention relates to a hydraulic operating device for a cycle or for a motorcycle comprising a distribution body of hydraulic fluid.

Hydraulic operating devices for hydraulic bicycle brakes or for a motorcycle clutch are known in the state of the art.

For example, a hydraulic braking system for a bicycle comprises a brake caliper and a hydraulic operating device for brakes that comprises a control lever adapted to rotate about a pin, a piston that slides in a main cylinder of a cartridge in conformity with the rotation of the control lever. When the piston slides, the fluid (oil, for example) is ejected from the main cylinder to control the brake caliper.

The object of the present invention consists in making a hydraulic operating device adapted to distribute a hydraulic system fluid according to different outlet directions and adapted to be used with different cartridges.

A further object of the present invention consists in making a universal cartridge that can be inserted into any hydraulic operating device adapted to distribute a hydraulic system fluid, wherein the hydraulic operating devices comprise fluid outlet connectors arranged according to different outlet directions.

Such objects according to the invention are achieved with a hydraulic operating device according to claim 1.

Other features are provided in the dependent claims.

The features and advantages of the present invention will be more apparent from the following description, which is to be understood as exemplifying and not limiting, with reference to the appended schematic drawings, wherein:
figure 1 is an exploded perspective view of a hydraulic operating device for a cycle or for a motorcycle according to the present invention;
figure 2 is a side view of the hydraulic operating device;
figure 3 is a rear view of the hydraulic operating device;
figure 4 is a section view according to the line IV-IV of figure 3;
figure 5 is a perspective view of a float valve of the hydraulic operating device;
figure 6 shows a section view of the float valve of figure 5, according to the line IV-IV of figure 3;
figure 7 shows a section view of the float valve according to the line VII-VII of figure 6;
figure 8 shows a perspective view of a distribution body of hydraulic fluid of the hydraulic operating device;
figure 9 shows a section view of the distribution body of figure 8, according to the line IV-IV of figure 3;
figure 10 shows a rear view of the distribution body.

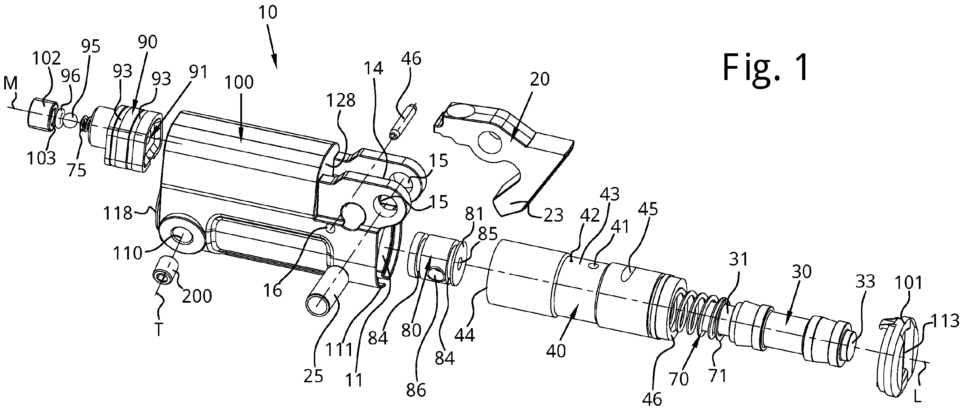

With reference to the mentioned figures, a hydraulic operating device 10 for a hydraulic system fluid of a cycle or of a motorcycle is shown; figures 1 to 10 in particular show a hydraulic operating device 10 for a hydraulic system fluid for a bicycle brake. The hydraulic operating device 10 acts as actuator of brake calipers.

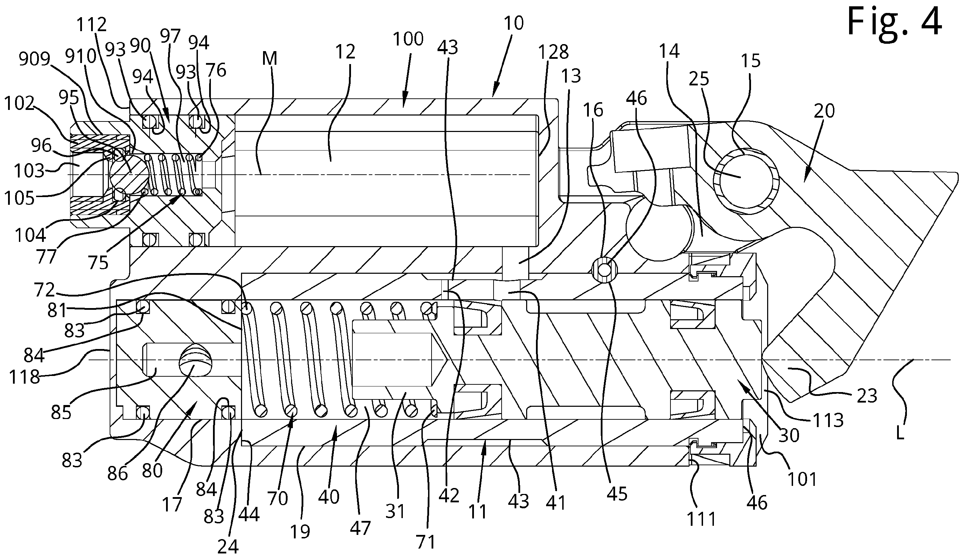

As shown in particular in figure 4, the hydraulic operating device 10 comprises a first chamber 11 and a second chamber 12 which are in fluid communication by means of a first channel 13.

The first chamber 11 and the second chamber 12 are carved into a body 100 of the hydraulic operating device 10.

The first channel 13 is carved into the body 100 between the first 11 and the second chamber 12.

The first chamber 11 comprises a longitudinal dimension carved into the body 100 along a first longitudinal axis L.

The second chamber 12 comprises a longitudinal dimension carved into the body 100 along a second longitudinal axis M.

The first longitudinal axis L and the second longitudinal axis L are parallel to each other so as to advantageously reduce the dimensions of the hydraulic operating device 10.

The first chamber 11 is enclosed by walls of the body 100 that are cylindrical in shape.

As shown in particular in figures 1 to 4, the first chamber 11 is closed at the back by means of a rear wall 118 of the body 100 and is open at the front by means of a front opening 111 of the body 100.

The front opening 111 has dimensions adapted for the insertion of other elements of the hydraulic operating device 10.

The second chamber 12 is enclosed by walls of the body 100.

The second chamber 12 is closed at the front by means of a front wall 128 of the body 100 and is open at the back by means of a rear opening 112 of the body 100. The rear opening 112 has dimensions adapted for the insertion of further other elements of the hydraulic operating device 10.

The second chamber 12 is a tank for the hydraulic system fluid.

The first channel 13 is carved into the body along a transverse direction which is perpendicular both to the first longitudinal axis L and to the second longitudinal axis M.

The body 100 of the hydraulic operating device 10 comprises two connectors 110 that are through openings that put the outside of the body 100 in fluid communication with the first chamber 11 and that are adapted to mount respective connectors 200 of the hydraulic system. The connectors 110 of the body 100 are adapted to make the hydraulic system fluid exiting from the first chamber 11 or entering the first chamber 11 pass through them.

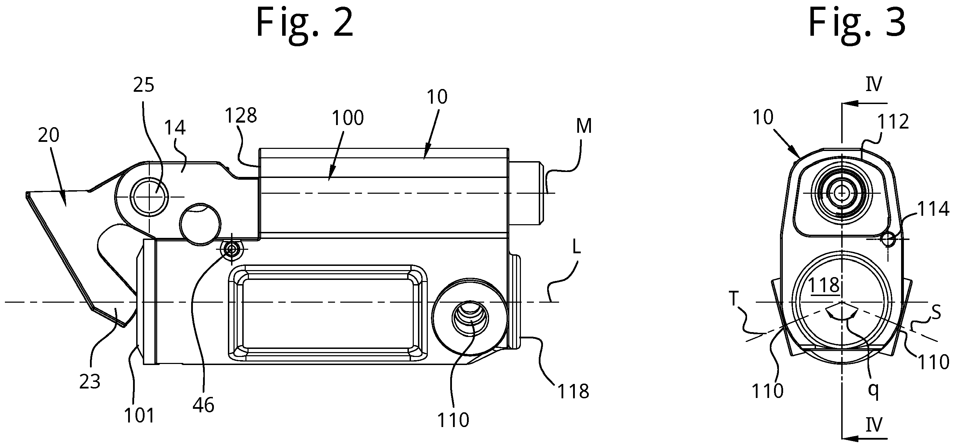

As shown in particular in figure 3, the two connectors 110 are carved into the body 100 along two different transverse directions arranged along two respective transverse axes S and T. The two transverse axes S and T are perpendicular to the first L and to the second M longitudinal axis L. The two transverse axes S and T lie on a transverse geometric plane perpendicular to the longitudinal axes L and M, wherein an angle θ is shown between a first transverse axis S and a second transverse axis T of the two transverse axes.

The angle θ between the first transverse axis S and the second transverse axis S is comprised between 0 and 360 sexagesimal degrees. The hydraulic operating device 10 may indeed provide different connectors 110 arranged at different angles θ with respect to the ones shown in particular in figure 3. For example, when the angle θ is of 0 sexagesimal degrees, then one connector 110 alone, arranged toward the bottom with respect to figure 3, is provided in place of the two connectors 110. For example, when the angle θ is of 360 sexagesimal degrees, then one connector 100 alone, arranged toward the top with respect to figure 3, is provided in place of the two connectors 110.

As shown in particular in figures 1 to 4, the body 100 of the hydraulic operating device 10 comprises a slotted portion 14 comprising two through slots 15. The slotted portion 14 is arranged in the upper front part of the body 100 of the hydraulic operating device 10.

The hydraulic operating device 10 comprises a control lever 20 and a pin 25, wherein the control lever 20 is rotatably mounted by means of the pin 25 with the two through slots 15 of the slotted portion 14 of the body 100.

The hydraulic operating device 10 comprises the other elements of the hydraulic operating device 10 adapted to be inserted inside the first chamber 11. The other elements of the hydraulic operating device 10 are a distribution body 80 of the hydraulic system fluid, a cartridge 40, a first elastic element 70 and a piston 30.

The distribution body 80, the cartridge 40, the first elastic element 70 and the piston 30 are mounted inside the first chamber 11 of the hydraulic operating device 10 along the direction of the first longitudinal axis L, making them pass in sequence through the front through opening 111 of the body 100.

As shown in particular in figure 4, the first chamber 11 comprises a rear portion 17 and a front portion 19. The rear portion 17 of the first chamber 11 has a smaller diameter with respect to the front portion 19.

The rear portion 17 of the first chamber 11 is adapted to allow the sealable insertion of the distribution body 80 until a rear wall 82 of the distribution body 80 is stopped in contact with the rear wall 118 of the body 100.

The second portion 19 of the first chamber 11 is adapted to allow the insertion of the cartridge 40.

A step 24 is formed between the first portion 17 and the second portion 19 of the first chamber 11, which step is adapted to act as a stop for an open rear end in the rear through opening 44 of the cartridge 40.

The first portion 17 of the first chamber 11 comprises the two connectors 110 for the hydraulic system fluid.

As shown in particular in figures 1, 4, the cartridge 40 is a hollow cylinder comprising a front through opening 46 and the rear through opening 44.

The cartridge 40 comprises an outer surface comprising a first groove 43 that decreases the outer diameter of the outer surface of the cartridge 40. A first through opening 41 and a second through opening 42 are carved into the body of the cartridge 40, starting from the first groove 43 up to reaching the inner surface of the cartridge 40.

The inner part of the hollow cartridge 40 identifies a cavity 47 of the cartridge 40.

The first groove 43 of the cartridge 40 is arranged at the first channel 13 of the body 100.

The first groove 43 of the cartridge 40 is in fluid communication with the first channel 13 of the body 100.

The first through opening 41 and the second through opening 42 are in fluid communication with the first channel 13 of the body 100 and are adapted to make the fluid pass between the first groove 43 and the inner surface of the cartridge 40.

The first through opening 41 and the second through opening 43 are carved into the body of the cartridge 40 along transverse axes that are perpendicular to the first longitudinal axis L.

As shown in particular in figures 1, 2, 4, the hydraulic operating device 10 also comprises a stopping grub screw 46.

The cartridge 40 comprises a second groove 45 adapted to be engaged by the stopping grub screw 46 that engages in a through opening 16 in the body of the hydraulic operating device 10 to block the cartridge 40 inside the first chamber 11, thus preventing it from sliding inside the front portion 19 of the first chamber 11, therefore blocking the cartridge 40 with the body 100.

The cavity 47 of the cartridge 40 is adapted to allow the sliding of the piston 30 and the compression and relaxation movement of the first elastic element 70.

The front through opening 46 of the cartridge 40 has suitable dimensions for the insertion of the first elastic element 70 and of the piston 30.

The control lever 20 comprises a pressing portion 23 that is adapted to switch from a multiplicity of positions during the rotation of the control lever 20 about the pin 25. The pressing portion 23 of the control lever 20 is adapted to push a front portion 33 of the piston 30 of the hydraulic operating device 10 inside the front portion 19 of the first chamber 11 along the direction of the first longitudinal axis L and toward the rear wall 118 of the body 100.

The piston 30 is slidably mounted with said cavity 47 of the cartridge 40 and is adapted to make the first elastic element 70 switch from at least one compressed position to at least one more compressed position. The piston 30 comprises the front portion 33 facing toward the front opening 111 of the body 100 and a rear portion comprising a stem 31 that mounts a front end 71 of the first elastic element 70.

A rear end 72 of the first elastic element 70 is mounted against a front wall 81 of the distribution body 80.

The first elastic element 70 is a helical spring. Other types of elastic elements may also be provided.

As shown in particular in figures 1, 4 to 7, the distribution body 80 has the shape of a cylinder and is mounted inside the rear portion 17 of the first chamber 11 of the hydraulic operating device 10 by means of two O-rings 83, and the rear wall 82 of the distribution body 80 is in contact with the rear wall 118 of the body 100.

The distribution body 80 comprises two seats 84 carved on its outer wall, wherein each of these two seats 84 is adapted to house one of the two O-rings 83, respectively. The seats 84 for the O-rings 83 are coaxial. Once the two O-rings 83 are mounted in the two respective seats 84 of the distribution body 80, the distribution body 80 is mounted with the rear portion 17 of the first chamber 11 so that the two O-rings 83 interlock the distribution body 80 with the inner walls of the rear portion 17 of the first chamber 11.

The distribution body 80 comprises an axial duct 85 carved inside the distribution body 80 along the first longitudinal axis L. The axial duct 85 is in fluid communication with the first chamber 11 and with the cavity 47 of the cartridge 40.

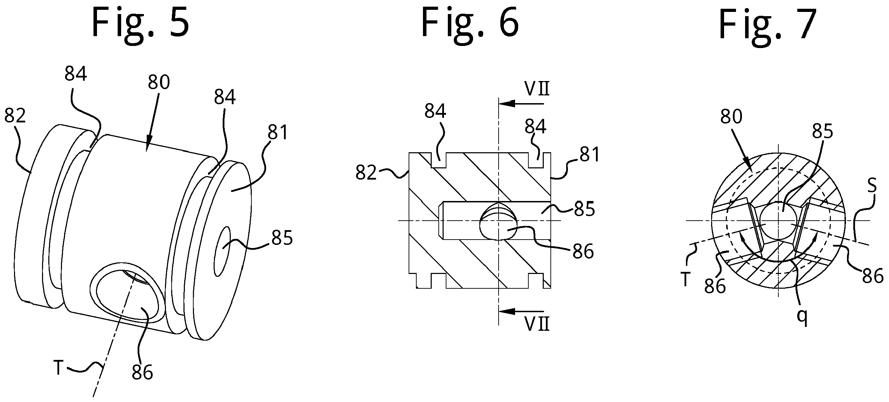

The distribution body 80 comprises two transverse ducts 86 arranged along the transverse axes S and T, as shown in particular in figure 7, wherein also the angle θ is shown. The transverse ducts 86 of the distribution body are arranged along the same first S and second T transverse axes of the connectors 110 of the body 100 of the hydraulic operating device 10.

The transverse ducts 86 are in fluid communication with the axial duct 85 and with the two respective connectors 110.

Advantageously, the distribution body 80 is not made in one piece with the cartridge 40 so that should the angle θ of the connectors 110 of the hydraulic operating device 10 change, it is sufficient to replace only the distribution body 80 that has transverse ducts 86 arranged according to the same angle θ as the connectors 110, it not being necessary to replace the cartridge 40, which is universal.

As shown in particular in figures 1 and 4, a front plug 101 engages with the front opening 111 of the first chamber 11 so as to keep inside the hydraulic system fluid and the other elements of the hydraulic device 80, 70, 30, 40.

In particular as shown in figure 4, the cartridge 40 provides engaging elements for the front plug 101.

The front plug 101 comprises a through opening 113 adapted for the front portion 33 of the piston 30 to pass through it to be pushed by the pressing portion 23 of the control lever 20.

As shown in particular in figures 1, 8 to 10, the hydraulic operating device 10 comprises a floating plug 90 which is slidably mounted inside the second chamber 12 of the hydraulic operating device 10 by means of two interlocking O-rings 93. The floating plug 90 is mounted inside the second chamber 12, making it pass through the rear opening 112.

The further other elements of the hydraulic operating device 10 adapted to be inserted into the rear opening 112 of the second chamber 12 of the body 100 of the hydraulic operating device 10 are the floating plug 90, two interlocking O-rings 93, a sphere 95, a second elastic element 75, a rear O-ring 96 and a rear plug 102.

The floating plug 90 comprises two seats 94 carved on its outer wall, wherein each of these two seats 94 is adapted to house one of the two interlocking O-rings 93, respectively. The seats 94 for the interlocking O-rings 93 are coaxial. Once the two interlocking O-rings 93 are mounted in the two respective seats 94 of the floating plug 90, the floating plug 90 is slidably mounted with the inner walls of the second chamber 12 so that the two interlocking O-rings 93 interlock the floating plug 90 with the inner walls of the second chamber 12.

The two seats 94 for the respective two interlocking O-rings 93 are a front seat 94 arranged respectively on a front portion of the outer wall of the floating plug 90 and a rear seat 94 arranged respectively on a rear portion of the outer wall of the floating plug 90, so that the floating plug 90 may slide inside the second chamber 12, keeping stopped the sliding axis, which is the second longitudinal axis M.

The floating plug 90 comprises an axial through duct 91 carved inside the body of the floating plug 90 along the second longitudinal axis M. The axial through duct 91 is in fluid communication with the second chamber 12 and with the first channel 13 of the body 100 of the hydraulic operating device 10, and is in communication with the outside of the hydraulic operating device 10.

The axial duct 91 comprises a cylindrical central portion 912 that widens forwards forming a front portion 911, wherein this front portion 911 gradually widens its inner dimension to be better adapted to the inner dimensions and to the shape of the second chamber 12. The front portion 911 of the axial duct 91 is in fluid communication with the second chamber 12.

The rear verse of the central portion 912 is in fluid communication with a part with an increased diameter 97 of the axial duct 91, wherein this part with an increased diameter 97 is adapted to provide a holding step 92 between the lower diameter of the central portion 912 of the axial duct 91 and the part with an increased diameter 97. Such holding step 92 is adapted to serve as stop at a front end 76 of the second elastic element 75 of the floating plug 90. A rear end 77 of the second elastic element 75 is mounted with the sphere 95 of the floating plug 90.

The sphere 95 is mounted in roto-translation with the axial duct 91. The part with an increased diameter 97 of the axial duct 91 has a diameter adapted to allow the rolling and/or the sliding of the sphere 95 inside it. The part with an increased diameter 97 of the axial duct 91 of the floating plug 90 is a housing for the sphere 95.

The floating plug 90 comprises a rear opening 918 from which the second elastic element 75, the sphere 95, the rear O-ring 96 and the rear plug 102 can be inserted.

The part with an increased diameter 97 of the axial duct 91 comprises a rear portion that comprises six radial channels 910 arranged along radial directions that start from the centre of the axial duct 91 wherein there is the second longitudinal axis M, outwards of the floating plug 90. Such radial channels 910 gradually widen their cross section to directions parallel to the second longitudinal axis M.

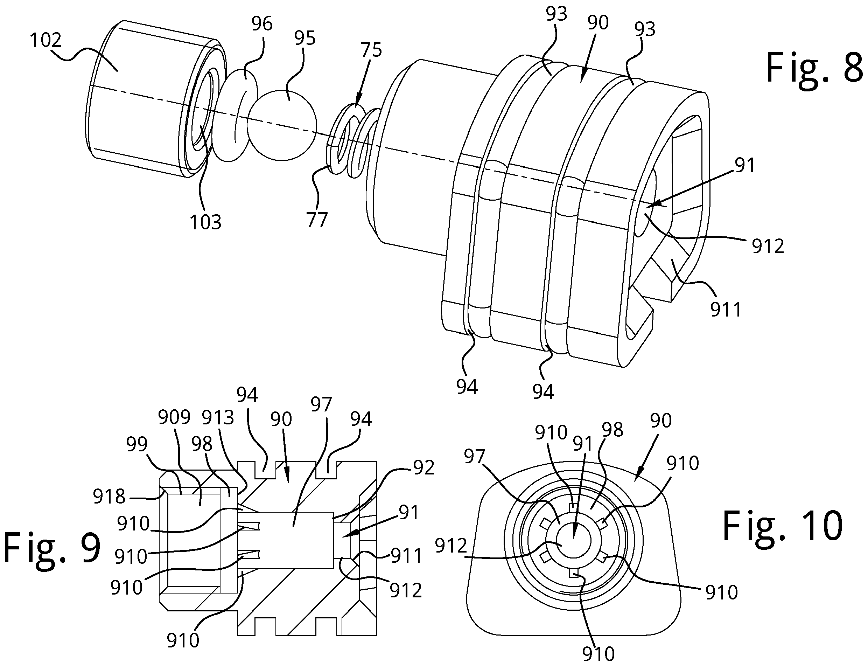

In particular as shown in figure 9, each radial channel 910 of the six radial channels 910 gradually widens a cross section of the radial channel 910 in a linear way and a longitudinal section of the radial channel 910 has a triangular shape.

As shown instead in figure 10, the cross section of the radial channels 910 has a geometric quadrangular shape.

As shown in particular in figure 9, the part with an increased diameter 97 of the axial through duct 91 further widens with a second step 913 in a rear portion 909 of the axial through duct 91, wherein the rear portion 909 has a greater diameter than the part with an increased diameter 97 of the axial through duct 91.

The rear portion 909 of the axial through duct 91 comprises a front portion 98 and a rear portion 99 that comprise inner threaded walls which is the seat of the rear plug 102 that comprises outer threaded walls adapted to be screwed with the inner walls of the rear portion 99 of the rear portion 909 of the axial through duct 91.

As shown in particular in figure 4, the rear plug 102 is a hollow cylinder comprising a rear through opening 103. The rear through opening 103 is carved inside the body of the rear plug 102 along the second longitudinal axis M. Inner walls of the rear plug 102 comprise a seat 104 for the rear O-ring 96 adapted to block the sphere 95 between the rear plug 102 and the part with an increased diameter 97 of the axial through duct 91 of the floating plug 90. Inner walls of the rear plug 102 comprise an inner wall 105 that reduces the inner diameter of the rear through opening 103 of the rear plug 102.

The rear plug 102 is mounted with said axial through duct 91 and is adapted to retain the sphere 95 inside the axial through duct 91. In particular, the inner wall 105 prevents the sphere 95 from coming out through the rear through opening 103 of the rear plug 102, retaining the sphere 96 inside the axial through duct 91.

The rear O-ring 96 is mounted with the sphere 95 and is pressed by the sphere 95 which in turn is pressed by the second elastic element 75 against the inner wall 105 of the rear plug 102, serving as sealing gasket to avoid the fluid of the second chamber 12 from exiting outwards.

The sphere 95 is adapted to make the second elastic element 75 switch from at least a compressed position to at least a more compressed position, wherein the compressed position of the second elastic element 75 provides for the sphere 95 to push the rear O-ring 96 to block the fluid from coming out of the axial through duct 91, while the more compressed position of the second elastic element 75 allows the sphere 95 to roto-translate and allows the fluid to come out of the axial through duct 91.

Concerning the operation of the hydraulic operating device 10, the control lever 20 rotates about the pin 25 and the pressing portion 23 pushes the front portion 33 of the piston 30 toward the inside of the first chamber 11, making the piston 30 slide inside the inner walls of the cartridge 40 in conformity with the rotation of the control lever 20. When the piston 30 slides, the hydraulic system fluid is ejected from the first chamber 11 through the axial duct 85 of the distribution body 80, passing through the two transverse ducts 86 of the distribution body 80 toward the hydraulic system to control the brake caliper.

When the control lever 20 does not push on the front portion 33 of the piston 30, the piston 30 is pushed into the initial position by the first elastic element 70 and the hydraulic system fluid goes back into the first chamber 11 or arrives from the second chamber 12 by means of the first channel 13.

Concerning a filling or cleaning of fluid, a grub screw (not shown in the figures) pushes the sphere 95, compressing the second elastic element 75 until the rear through opening 103 is in fluid communication with the axial duct 91 to clean the fluid present in the second chamber 12 or to fill the second chamber 12 with the fluid from the rear through opening 103. When the grub screw stops compressing the sphere 95, it is pushed into the initial position against the inner wall 105 of the rear plug 102 by the elastic force of the second elastic element 75 of the floating plug 90, keeping the second chamber 12 closed.

Concerning a verification of the level of fluid present in the second chamber 12, the floating plug 90 is adapted to slide inside the second chamber 12 so as to keep the floating plug 90 under pressure against the fluid present inside the second chamber 12 also when the quantity of fluid, and therefore the volume of fluid of the second chamber 12 decreases following the use of the hydraulic operating device 10, and more generally, of the hydraulic system of the cycle or motorcycle brake or of the clutch of the motorcycle. Measuring the position of the floating plug 90 with respect to the body 100 of the hydraulic operating device 10, it is possible to establish the level of fluid present in the second chamber 12. The floating plug 90 adheres with the inner wall of the second chamber 12 and being slidably mounted with this inner wall of the second chamber 12 by means of the O-rings 93, it may translate along the second longitudinal axis M, dragged by the changes of volume of the fluid inside the second chamber 12 caused by the introduction of the fluid.

Alternatively, there is also provided a grub screw 114, shown in figure 3, adapted to make the floating plug 90 slide toward the front or toward the back of the second chamber 12.

Alternatively, it is possible to provide for the hydraulic operating device 10 to be for a hydraulic system fluid of a clutch of a motorcycle.

Alternatively, the cartridge 40 is made in one piece with the body of the hydraulic operating device 10. Advantageously, this alternative provides for the cartridge 40 not to be required, rather for it to have a different spatial arrangement of the connectors 110 in the presence of a different hydraulic operating device 10, which is sufficient to replace the distribution body 80 alone with another one comprising transverse ducts 86 reproducing the spatial arrangement of the connectors 110 of the hydraulic operating device 10.

Alternatively, it is possible to provide for the connectors 110 not to lie on the same geometric plane, rather to be arranged according to any spatial distribution. In such alternative, it is sufficient to replace the distribution body 80 alone with one that comprises transverse ducts 86 that reproduce the different spatial arrangement of the connectors 110 of the hydraulic operating device 10.

Alternatively, it is possible for sealing elements 83, 93, 96 to be provided in place of the O-rings 83, 93, 96.

The invention thus conceived is susceptible to many modifications and variants, all falling within the same inventive concept; furthermore, all details can be replaced by equivalent technical elements. In practice, the materials used, as well as the dimensions thereof, can be of any type according to the technical requirements.

## Claims

1. Hydraulic operating device (10) for a hydraulic system fluid of a cycle or of a motorcycle comprising a body (100), a first chamber (11) carved into the body (100) in fluid communication with a tank (12) of the hydraulic system fluid and adapted for containing a distribution body (80) for the hydraulic system fluid, a cartridge (40), a first elastic element (70) and a piston (30),
said first chamber (11) is enclosed by walls of the body (100), is closed at the back by means of a rear wall (118) of the body (100) and is open outward by means of a front opening (111) of the body (100),
said body (100) comprises at least one connector (110) carved as a through opening in the body (100) and in fluid communication with said first chamber (11),
said at least one connector (110) is adapted to make the hydraulic system fluid exiting from the first chamber (11) or entering the first chamber (11) pass through it, wherein said fluid is moved by said piston (30),
said front opening (111) of the body (100) has dimensions suitable for the insertion of said distribution body (80) of the hydraulic system fluid, of said cartridge (40), of said first elastic element (70) and of said piston (30) into the first chamber (11),
said distribution body (80) is mounted inside the first chamber (11),
said distribution body (80) comprises an axial duct (85) carved inside the distribution body (80), wherein said axial duct (85) is in fluid communication with the first chamber (11),
said distribution body (80) comprises at least one transverse duct (86) in fluid communication with the axial duct (85) and with one respective of said at least one connector (110) of the body (100),
said cartridge (40) is hollow and comprises a front through opening (46) and a rear through opening (44), the inside of the hollow cartridge (40) defines a cavity (47) of the cartridge (40), said cavity (47) is in fluid communication with the first chamber (11) and with the axial duct (85) of the distribution body (80),
said cartridge (40) is mounted with the body (100), said first elastic element (70) is mounted inside the first chamber (11),
said piston (30) is slidably mounted inside the first chamber (11) and is adapted to make said first elastic element (70) switch from at least a compressed position to at least a more compressed position.

2. Hydraulic operating device (10) according to claim 1, **characterised in that** said front through opening (46) of the cartridge (40) has dimensions adapted for the insertion of at least the first elastic element (70) and at least the piston (30),
said first elastic element (70) is mounted inside the cavity (47) of the cartridge (40),
said piston (30) is slidably mounted inside said cavity (47) of the cartridge (40) and is adapted to make said first elastic element (70) switch from said at least one compressed position to said at least one more compressed position.

3. Hydraulic operating device (10) according to any one of claims 1 or 2, **characterised in that** said first elastic element (70) comprises a rear end (72) mounted against a front wall (81) of the distribution body (80) and a front end (71) mounted with a rear portion of the piston (30).

4. Hydraulic operating device (10) according to any one of claims 1 to 3, **characterised in that** said distribution body (80) is sealably mounted with the first chamber (11) by means of at least one sealing element (83) of the distribution body (80) wherein a rear wall (82) of the distribution body (80) is stopped in contact with the rear wall (118) of the body (100).

5. Hydraulic operating device (10) according to any one of claims 1 to 4, **characterised in that** said cartridge (40) is made in one piece with said body (100).

6. Hydraulic operating device (10) according to any one of claims 1 to 5, **characterised in that** the hydraulic operating device (10) comprises a control lever (20) and a pin (25), wherein the control lever (20) is rotatably mounted by means of the pin (25) with a slotted portion (14) of the body (100), said control lever (20) comprises a pressing portion (23) which is adapted to push a front portion (33) of said piston (30) inside the cavity (47) of the cartridge (40).

7. Hydraulic operating device (10) according to any one of claims 1 to 6, **characterised in that** said first chamber (11) comprises a longitudinal dimension carved into the body (100) along a first longitudinal axis (L), wherein the walls of the body (100) that enclose the first chamber (11) are cylindrical in shape,
said distribution body (80), the cartridge (40), the first elastic element (70) and the piston (30) are mounted inside the first chamber (11) along the direction of the first longitudinal axis (L),
said cartridge (40) is a hollow cylinder.

8. Hydraulic operating device (10) according to any one of claims 1 to 7, **characterised in that** said distribution body (80) comprises at least one seat (84) carved on its outer wall, wherein said at least one seat (84) is adapted to house one of said at least one sealing element (83).

9. Hydraulic operating device (10) according to any one of claims 1 to 8, **characterised in that** said axial duct (85) is carved within the distribution body (80) along a first longitudinal axis (L) and **in that** said at least one transverse duct (86) is carved into the distribution body (80) along at least one transverse axis (S, T), wherein said at least one transverse axis (S, T) lies on a transverse geometric plane which is perpendicular to said first longitudinal axis (L).

10. Hydraulic operating device (10) according to any one of claims 1 to 9, **characterised in that** said at least one connector (110) of the body (100) of the hydraulic operating device (10) is a through opening which puts the outside of the body (100) in fluid communication with the first chamber (11) and **in that** said at least one connector (110) is adapted to mount at least one respective connector (200) of the hydraulic system.

11. Hydraulic operating device (10) according to any one of claims 1 to 10, **characterised in that** said distribution body (80) comprises two transverse ducts (86) respectively arranged along a first transverse axis (S) and along a second transverse axis (T), wherein an angle (θ) between the first transverse axis (S) and the second transverse axis (S) is comprised between 0 and 360 sexagesimal degrees.

12. Hydraulic operating device (10) according to claim 11, **characterised in that** it comprises two connectors (110) of the body (100) which are arranged along the same first transverse axis (S) and second transverse axis (T) of the two transverse ducts (86) of the distribution body (80).

13. Hydraulic operating device (10) according to any one of claims 1 to 12, **characterised in that** said first chamber (11) comprises a rear portion (17) and a front portion (19), wherein the rear portion (17) of the first chamber (11) has a smaller diameter than the front portion (19) of the first chamber (11), wherein said first portion (17) of the first chamber (11) comprises said at least one connector (110) for the hydraulic system fluid, wherein the rear portion (17) of the first chamber (11) is adapted to allow the sealed insertion of the distribution body (80).

14. Hydraulic operating device (10) according to claim 13, **characterised in that** the second portion (19) of the first chamber (11) is adapted to allow the insertion of the cartridge (40), between the first portion (17) and the second portion (19) of the first chamber (11) a step (24) is formed which is adapted to act as a stop for an open rear end in the rear through opening (44) of the cartridge (40).

15. Hydraulic operating device (10) according to any one of claims 1 to 14, **characterised in that** said cartridge (40) comprises an outer surface comprising a first groove (43) which decreases the outer diameter of the outer surface of the cartridge (40), at least one through opening (41, 42) is carved into the body of the cartridge (40) between the first groove (43) and the cavity (47) of the cartridge (40), wherein said first groove (43) is arranged at a first channel (13) of the body (100) which is carved into the body (100) between the first chamber (11) and the tank (12), said first channel (13) putting the first chamber (11) in fluid communication with the tank (12), wherein said at least one through opening (41, 42) is in fluid communication with the first channel (13) of the body (100).

16. Hydraulic operating device (10) according to any one of claims 1 to 15, **characterised in that** said cartridge (40) comprises a second groove (45) adapted to be engaged by a stopping grub screw (46) of the hydraulic operating device (30), wherein said stopping grub screw (46) engages in a through opening (16) of the body (100) of the hydraulic operating device (10), blocking the cartridge (40) with the body (100).
